(19)

Europäisches
Patentamt
European
Patent Office
Office européen
des brevets

(11)  **EP 2 466 334 A1**

(12)  **EUROPEAN PATENT APPLICATION**

(43) Date of publication:
**20.06.2012 Bulletin 2012/25**

(51) Int Cl.:
*G01S 19/11* (2010.01)        *G01S 5/14* (2006.01)
*G01S 5/02* (2010.01)

(21) Application number: **10275130.2**

(22) Date of filing: **16.12.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Astrium Limited
Stevenage,
Hertfordshire SG1 2AS (GB)**

(72) Inventor: **The designation of the inventor has not
yet been filed**

(74) Representative: **Johansson, Anna Olivia et al
Venner Shipley LLP
200 Aldersgate
London EC1A 4HD (GB)**

(54)  **Determining an estimated location**

(57)     A receiver is configured to receive signals wirelessly from a plurality of pseudolites, each signal including information defining a pseudolite from which the signal was transmitted. The receiver is configured to determine an estimated location based on which one or more pseudolites the receiver is currently within range of. The receiver may determine the estimated location independently of a time taken for each one of the signals to reach the receiver from the one or more pseudolites. The signals may be formatted according to a global navigation satellite system GNSS specification.

*FIG. 6*

**Description**

The present invention relates to a receiver which is configured to receive signals wirelessly from a plurality of pseudolites. More particularly, the present invention relates to a receiver which is configured to determine an estimated location based on which one or more pseudolites it is currently within range of.

Global navigation satellite systems (GNSS) are well-known in the art, and enable the location of a ground-based receiver to be accurately calculated. A GNSS receiver is a receiver which calculates its location using signals received from a plurality of satellites, based on triangulation. At present, the most widely used system is the Global Positioning System (GPS), whilst other systems such as GLONASS, Galileo, and Compass are at various stages of development. A GNSS comprises a plurality of satellites (typically 20-30) which communicate with a receiver. Each satellite includes a highly accurate atomic clock, and the clocks on all satellites within the GNSS network are synchronised to one another. The satellites transmit radiofrequency (RF) signals which include information which allows the receiver to identify the location of the satellite when the signal was transmitted, as well as a time at which the signal was transmitted. The receiver can therefore calculate the distance travelled by the signal, since the velocity of the wave is known (i.e. the speed of light). From this, the receiver calculates its position by triangulation, based on signals from at least four satellites. That is, three satellites are required to calculate the x, y and z coordinates of the receiver, whilst the fourth satellite is required to calculate a timing offset between the internal clock of the receiver and the internal clocks of the satellites.

However, one limitation of GNSS networks is that a line-of-sight is required between the receiver and the satellite in order to receive the signals. This can make it difficult or impossible for signals to be received in certain locations, for example when the receiver is in a built-up area or is indoors. Systems have been developed which allow a GNSS receiver to accurately calculate its position even when signals from GNSS satellites are not available. These systems incorporate ground-based transmitters, referred to as pseudolites (a contraction of "pseudo-satellite"), which transmit GNSS-like signals (i.e. signals formatted according to a GNSS message structure) to the receiver. The pseudolites include internal clocks which are synchronised, and the location of each pseudolite is known to a high degree of accuracy (the pseudolite locations are accurately measured during set-up of the system, and this information is provided to the receiver). The receiver then calculates its position using a GNSS-like method, i.e. by triangulation using signals from at least four pseudolites. Typically, in a pseudolite-based navigation system the distance between a transmitter and receiver may be several metres or several tens of metres. In order to accurately calculate the time-of-flight of a signal over such distances, the internal clocks of the pseudolites must be highly accurate, and must typically be synchronised to within a nanosecond. As a result, conventional pseudolite-based navigation systems are expensive, and require the pseudolite clocks to be resynchronised periodically to ensure proper functioning of the system.

The present invention aims to address drawbacks inherent in known arrangements.

According to the present invention, there is provided a receiver comprising an antenna configured to receive signals wirelessly from a plurality of pseudolites, each one of the signals including information defining a pseudolite from which the signal was transmitted, and means for determining an estimated location of the receiver based on which one or more pseudolites the receiver is currently within range of.

The receiver may identify the one or more pseudolites based on the information included in the received signals.

The receiver may be a global navigation satellite system GNSS receiver.

The receiver may be within range of a pseudolite when a signal received from the pseudolite has a signal-to-noise ratio which is higher than a threshold value.

The receiver may be configured to determine the estimated location based on a known location of the one or more pseudolites.

If the receiver is currently within range of only a single one of the plurality of pseudolites, the receiver may be configured to calculate the estimated location as being a location of said one of the pseudolites.

If the receiver is currently within range of at least two of the plurality of pseudolites, the receiver may be configured to determine the estimated location as a mean location of the at least two pseudolites.

The receiver may be configured to measure the power of signals received from at least three of the plurality of pseudolites, and to determine the estimated location based on the measured signal powers and known transmission powers of the at least three pseudolites.

The receiver may be configured to determine the estimated location independently of a time taken for each one of the signals to reach the receiver from the one or more pseudolites.

The receiver may be configured to determine the estimated location based only on a known location of the one or more pseudolites, or the receiver may be configured to determine the estimated location based only on a known location and a known transmission power of the one or more pseudolites.

The receiver may be configured to receive signals formatted according to a global navigation satellite system GNSS specification from a plurality of GNSS satellites, and to receive the signals from the plurality of pseudolites according to the GNSS specification.

The receiver may be configured to validate an authentication code included within a signal received from one of the plurality of pseudolites.

If the authentication code is successfully validated, the receiver may be configured to store information about the estimated location.

According to the present invention, there is also provided apparatus comprising a plurality of pseudolites, and the receiver configured to receive signals wirelessly from the plurality of pseudolites.

The plurality of pseudolites may be arranged so as to divide a space into a plurality of regions, such that when the receiver is located within each one of the plurality of regions it is within range of one or more pseudolites and out of range of other ones of the plurality of pseudolites.

The receiver may be configured to determine which one of the plurality of regions it is currently located in, by determining which one or more pseudolites it is currently within range of.

Each one of the plurality of pseudolites may be configured to transmit information about its location and/or its transmission power to the receiver.

The plurality of pseudolites and the receiver may be configured for use in an indoor environment where the receiver is not able to receive signals from a global navigation satellite system GNSS satellite.

Each one of the plurality of pseudolites may include an internal clock, wherein the internal clocks of the plurality of pseudolites are not synchronised with each other.

Embodiments of the invention will now be described, by way of example, with reference to the accompanying drawings, in which:

Figure 1 illustrates a pseudolite navigation system, according to an embodiment of the present invention;
Figure 2 illustrates the pseudolite navigation system of Fig. 1 in plan view;
Figure 3 illustrates a pseudolite navigation system comprising a plurality of non-overlapping cells, according to an embodiment of the present invention;
Figure 4 illustrates a plurality of estimated locations of a receiver as it moves through the system of Fig. 3;
Figure 5 illustrates a pseudolite navigation system comprising three overlapping transmission cells, according to an embodiment of the present invention;
Figure 6 illustrates a pseudolite navigation system comprising a plurality of overlapping cells, according to an embodiment of the present invention;
Figure 7 illustrates a plurality of estimated locations of a receiver as it moves through the system of Fig. 6;
Figure 8 illustrates a pseudolite message structure according to an embodiment of the present invention;
Figure 9 illustrates a pseudolite-based information distribution system according to an embodiment of the present invention;
Figure 10 illustrates a method of using authentication in a pseudolite navigation system, according to an embodiment of the present invention; and
Figure 11 illustrates a pseudolite navigation system according to an embodiment of the present invention.

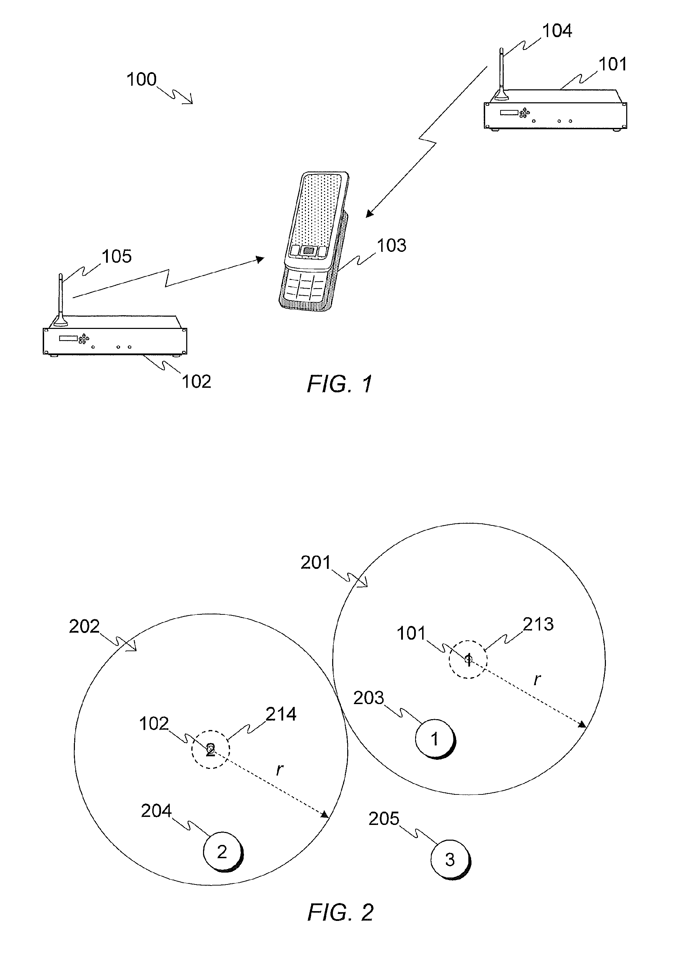

Referring now to Fig. 1, a pseudolite navigation system is illustrated according to an embodiment of the present invention. As shown in Fig. 1, the system 100 comprises a first pseudolite transmitter 101 (hereinafter referred to simply as a 'pseudolite'), a second pseudolite 102, and a receiver 103. In the present embodiment, the receiver 103 is a mobile telephone which includes a GNSS receiver (e.g. a GPS receiver). However, in other embodiments of the present invention the receiver may be any device which is capable of receiving GNSS signals.

As shown in Fig. 1, the first 101 and second 102 pseudolites each comprise an antenna 104, 105 for transmitting signals to the receiver 103. However, unlike a conventional pseudolite navigation system, in the present embodiment the receiver does not calculate its location by calculating time-of-flight information for each received signal. Instead, the transmission power of each one of the pseudolites 101, 102 is adjusted during setup of the system, such that each pseudolite defines a 'cell'. Outside the cell, signals from that pseudolite are too weak to be detected by the receiver 103. This will now be described in more detail with reference to Fig. 2. As shown in Fig. 2, in the present embodiment, the antennae 104, 105 of the pseudolites 101, 102 are arranged to radiate power isotropically (i.e. equally in all directions). Therefore a transmission cell is established around each pseudolite, the cell being spherical (circular when viewed in 2-D, as in Fig. 2) and having a radius $r$. The radius $r$ corresponds to a maximum effective range of the pseudolite, and as shown in Fig. 2, both the first 101 and second 102 pseudolites are configured to have the same maximum effective range $r$.

In more detail, for a constant transmission power the measured power of a received signal will decrease as the distance between the receiver and transmitter increases. The power loss may also be affected by various factors such as obstructions between the transmitter and receiver, multipath effects, and RF noise. In the present embodiment, the power loss can be approximated by an inverse square law relationship. That is, for a distance $D$ from the transmitter, the received power $P_{Rx}$ can be estimated as:

$$P_{Rx} = \frac{AP_{Tx}}{D^2},$$

where A is a constant, and $P_{Tx}$ is the transmitted power. Preferably, the value used for the transmitted power may be the EIRP ("effective isotropic radiated power") value, which takes into account factors such as the antenna and other gains at the transmitter. Although in the present embodiment an inverse square relationship is used, in other embodiments, the power loss as a function of distance may be modelled using a different proportionality.

Furthermore, in any environment there may be a certain level of background RF energy. A receiver can only resolve a signal against this background noise when the signal-to-noise ratio (SNR) of the received signal is higher than a threshold value. The maximum effective range of a pseudolite may therefore be defined as the maximum distance at which the SNR of the received signal is equal to or above this threshold. Beyond this range, the receiver 103 is no longer able to distinguish the transmitted signal from the background RF noise, and hence is not able to receive transmissions from that particular pseudolite. Here, a receiver is said to be able to "receive" a signal from a pseudolite if it is able to distinguish the signal against the background noise in order to decode any information carried in the signal.

As described above, the cells 201, 202 surrounding the first 101 and second 102 pseudolites are spherical in shape as the antennae 104, 105 are configured to radiate energy isotropically. However, in other embodiments, shaped antennae may be used to establish cells which are anisotropic in shape, i.e. non-spherical. Similarly, in the present embodiment the cells 201, 202 are arranged to not overlap. That is, the sum of the maximum ranges of each cell ($2r$ in the present embodiment) is set to be less than or equal to a separation distance between the antennae 104, 105 of the two pseudolites 101, 102. However, in other embodiments a plurality of pseudolites may be configured to create a plurality of overlapping cells, as will be described later.

Continuing with reference to Fig. 2, the receiver 103 comprises means for estimating its current position, for example a control module such as a processor, by determining which of the pseudolites it is currently able to receive transmissions from. That is, the receiver 103 is configured to determine whether or not it is currently located in one of the cells 201, 202 based on whether or not it is currently able to receive signals from either one of the pseudolites 101, 102. The signals transmitted from the pseudolites may include information identifying a pseudolite which transmitted the signal, for example a pseudorandom number PRN code which uniquely identifies a particular pseudolite amongst a plurality of pseudolites. To determine which pseudolites the receiver is currently within range of, the receiver may analyse signals received during a predetermined time period, the predetermined time period being a period that is sufficiently short that the receiver's location is substantially constant. Here, the receiver analyses a signal to identify the pseudolite which transmitted the signal, for example by extracting a PRN code from the signal.

In Fig. 2, by way of example, three separate receivers 203, 204, 205 are illustrated in different locations. Each one of the receivers 203, 204, 205 may be substantially similar to the receiver 103 of Fig. 1. The first receiver 203 is currently located in the first cell 201 (i.e. the cell created by the first pseudolite 101), and can receive signals from the first pseudolite 101 since it is within a maximum effective range of the first pseudolite 101. At the same time, the first receiver 203 is outside of the second cell 202 (i.e. the cell created by the second pseudolite 102), and is unable to receive signals from the second pseudolite 102 since it is beyond a maximum effective range of the second pseudolite 102. In contrast, the second receiver 204 is located inside the second cell 201 and outside the first cell 202, and hence can receive signals from the second pseudolite 102 but not from the first pseudolite 101. The third receiver 205 is located outside both cells 201, 202, and hence cannot receive signals from either the first 101 or second 102 pseudolite.

Each receiver 203, 204, 205 is provided with information about the positions of the first 101 and second 102 pseudolites. For example, positional information about each pseudolite may be pre-programmed into the receiver, or may be included in signals transmitted by the pseudolite and received by the receiver. In the present embodiment the cells of different pseudolites do not overlap, and so in any given location the receiver is only able to receive signals from one of the pseudolites 101, 102. The receiver is configured to estimate its current location as being the position of the pseudolite from which it is currently able to receive signals. Therefore the first receiver 203 calculates its current location as being the position of the first pseudolite 101, and the second receiver 204 calculates its current location as being the position of the second pseudolite 102. The third receiver 205 cannot calculate its current location as it is unable to receive signals from either of the pseudolites 101, 102.

The accuracy with which the current location of a receiver can be determined is dependent on the size of each cell. For example, if the maximum effective range of each pseudolite 101, 102 is set to be 10 metres, the location of a receiver can be determined to within a distance of 10 metres. The cell sizes may be configured during setup of the pseudolite navigation system 100, and may be selected according to the number of pseudolites in the system, the total area which is to be covered, and the desired accuracy.

In the present embodiment, each receiver is arranged to display its current location to a user. Therefore, the user can be informed of their current location to an accuracy that is determined by the cell radius. When a receiver is out of range of all of the pseudolites, it is arranged to display a message to a user stating that its current location cannot be determined. In another embodiment, if the receiver was previously within range of one of the pseudolites 101, 102 (i.e. was previously located in the first cell 201 or the second cell 202), the receiver is arranged to continue to display its location as being the location of the pseudolite for the cell in which it was previously located, until the receiver enters a new cell.

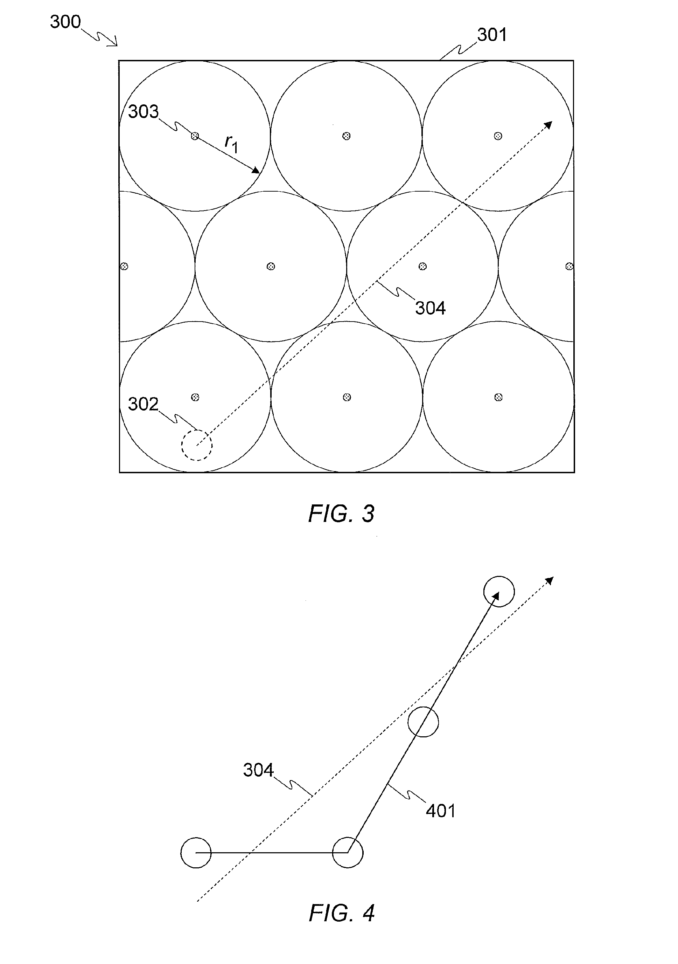

Referring now to Fig. 3, a pseudolite navigation system comprising a plurality of non-overlapping cells is illustrated, according to an embodiment of the present invention. A receiver is arranged to estimate its current position using a method similar to that described above in relation to Fig. 2, and as such a detailed description will be omitted here in order to maintain brevity.

The system 300 comprises a plurality of pseudolites which are arranged to provide coverage within an area 301. The area 301 may be an area in which GNSS signals from a satellite cannot be received. For example, the area 301 may be an enclosed space such as a railway terminal or airport, and the pseudolites may be configured such that each cell has a radius of about 10 metres. The pseudolite navigation system 300 allows a receiver 302 to continue to receive GNSS-like signals and calculate its position as it moves within the area 301, even though the receiver 302 is unable to receive normal GNSS signals from a satellite. However, in other embodiments, the area 301 may be an area in which GNSS signals from a satellite are able to be received

More specifically, in the embodiment of Fig. 3, the pseudolite navigation system 300 comprises ten pseudolites arranged on a regular hexagonal grid, such that the cells appear close-packed in plan view. Each one of the pseudolites is configured to transmit at the same power so that each pseudolite 303 has the same maximum effective range, $r_1$. As the cells in the present embodiment are arranged to touch without overlapping, the range $r_1$ of each pseudolite 303 is set to correspond to half of the separation distance between two nearest-neighbour pseudolites. The pseudolites may be configured to transmit signals according to any multiple-access transmission scheme, including but not limited to code-division multiple access CDMA and time-division multiple access TDMA. In this way, for any given signal, the receiver can identify the specific pseudolite from which the signal originated.

As shown in Fig. 3, by adjusting the transmission power of a plurality of pseudolites to create a plurality of discrete transmission cells, the location of a receiver can be determined with a high level of accuracy. Furthermore, a cell-based navigation method such as that shown in Fig. 3 enables the receiver to calculate its location without having to calculate time-of-flight information for a signal received from a pseudolite. Therefore, it is not necessary for internal clocks of the pseudolites to be synchronised with one another, which can simplify the setup and operation of the system 300 in comparison to a conventional pseudolite navigation system. Also, the internal clocks do not have to be highly accurate (i.e. do not need to be accurate to within a few nanoseconds), and so lower-cost pseudolites may be used in comparison to a conventional pseudolite navigation system.

Referring now to Fig. 4, a plurality of estimated locations of a receiver as it moves through the system of Fig. 3 is illustrated. Specifically, an actual path 304 taken by the receiver 302 is illustrated in both Figs. 3 and 4, and is shown by a dotted line. The receiver 302 is configured to continually update its estimated location as it moves within the system 300 of Fig. 3, by periodically determining which of the pseudolites it is currently within range of. As long as the receiver 302 remains within range of a given pseudolite (i.e. remains within the transmission cell of that pseudolite), its location is estimated as being the position of that particular pseudolite. Once the receiver 302 moves out of range of the pseudolite (i.e. exits the cell), if no signals are received from other pseudolites its location is no longer displayed. Alternatively, if the receiver 302 is now able to receive signals from another one of the pseudolites, its new location is estimated as being the position of a pseudolite from which the new signals are received.

In this way, as the receiver 302 moves between cells, a plurality of estimated locations 401 are displayed in sequence. This sequence of estimated locations 401 comprises a series of discrete locations, which in Fig. 4 are illustrated as a plurality of circles connected by a solid arrow. The arrow indicates the order in which the locations 401 are displayed as the receiver moves through the area 301 (cf. Fig. 3). Each discrete location is displayed for as long as the receiver 302 remains within a corresponding one of the cells. In the present example, the receiver 302 moves in a straight line through a total of four transmission cells, and so the estimated path 401 comprises four discrete locations. As shown in Fig. 4, the sequence of estimated locations 401 closely approximates the actual path 304. Therefore in the present embodiment, the cell-based pseudolite navigation system allows a moving receiver 302 to be tracked without having to accurately measure the time-of-flight of received signals.

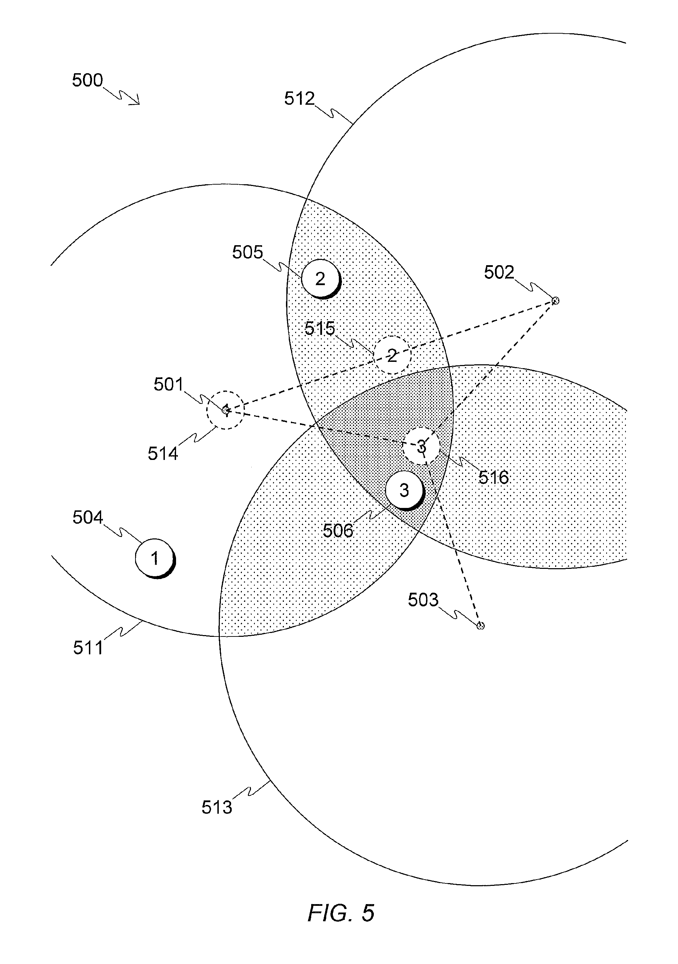

Referring now to Fig. 5, a pseudolite navigation system comprising three overlapping transmission cells is illustrated, according to an embodiment of the present invention. The system 500 comprises a first pseudolite 501 configured to create a first transmission cell 511, a second pseudolite 502 configured to create a second transmission cell 512, and a third pseudolite 503 configured to create a third transmission cell 513. Additionally in Fig. 5, three receiver locations 504, 505, 506 are illustrated along with corresponding estimated locations 514, 515, 516. In the present embodiment, each pseudolite 501, 502, 503 is configured to have a different maximum effective range, but in other embodiments some or all of the pseudolites may be configured to have the same maximum effective range.

In more detail, the first 511, second 512 and third 513 cells are configured to overlap. That is, for any given pair of neighbouring pseudolites, the sum of the ranges of the two pseudolites is configured to be greater than the separation distance of the two pseudolites. In this way, a plurality of overlapping regions are created in which a receiver is able to receive signals from two or more pseudolites at once (i.e. whilst remaining at the same location). In Fig. 5, regions in which a receiver is able to receive signals from two pseudolites are shown as lightly shaded regions, whilst a central region in which a receiver is able to receive signals from all three pseudolites is shown as a darkly shaded region.

As shown in Fig. 5, a first receiver location 504 is located inside the first cell 511, and outside the second and third cells 512, 513. Therefore, at the first receiver location 504, a receiver is only able to receive transmissions from the first pseudolite 501, and an estimated location 514 of the receiver corresponds simply to the position of the first pseudolite 501. This is similar to the situation in which cells are non-overlapping (cf. Fig. 3).

However, the second receiver location 505 is located in a region of overlap between the first and second cells 511, 512. At this location 505, a receiver is therefore within range of both the first pseudolite 501 and the second pseudolite 502, and can receive signals from both first and second pseudolites 501, 502. The receiver is out of range of the third pseudolite 503 (i.e. outside of the third cell 513) and hence cannot receive signals from the third pseudolite 503. Finally, the third receiver location 506 is located at a region of overlap between all three cells 511, 512, 513. Therefore at the third receiver location 506, a receiver is within range of all three pseudolites 501, 502, 503 and is able to receive signals from all three pseudolites 501, 502, 503.

In the present embodiment, when a receiver is at a location where it is able to receive signals from a plurality of pseudolites, the receiver is configured to estimate its current location as being an average position of said plurality of pseudolites. Therefore, the estimated location 515 of a receiver at the second receiver location 505 corresponds to a mean position of the first and second pseudolites 501, 502. Similarly, the estimated location 516 of a receiver at the third receiver location 506 corresponds to a mean position of the first, second and third pseudolites 501, 502, 503. In Fig. 5, the actual receiver locations are shown as solid circles, and the estimated receiver locations are shown as broken (i.e. dashed) circles.

By way of example, if a current location of the receiver lies in two overlapping cells (i.e. the receiver is able to receive signals from two pseudolites), and if the locations of the pseudolites and receiver are expressed in 2-dimensional Cartesian coordinates, the estimated location of the receiver may be calculated as:

$$x_r = \frac{x_1 + x_2}{2}$$

$$y_r = \frac{y_1 + y_2}{2}$$

where $(x_r, y_r)$ are the coordinates of the receiver's estimated location, $(x_1, y_1)$ are the coordinates of a first pseudolite from which signals are received, and $(x_2, y_2)$ are the coordinates of a second pseudolite from which signals are received. More generally, when a receiver is located in a total of $n$ overlapping cells, the coordinates $(x_r, y_r)$ of the estimated location of the receiver may be calculated as:

$$x_r = \frac{\sum_{i=1}^{n} x_i}{n}$$

$$y_r = \frac{\sum_{i=1}^{n} y_i}{n}$$

where $(x_i, y_i)$ are the coordinates of the $i^{th}$ pseudolite.

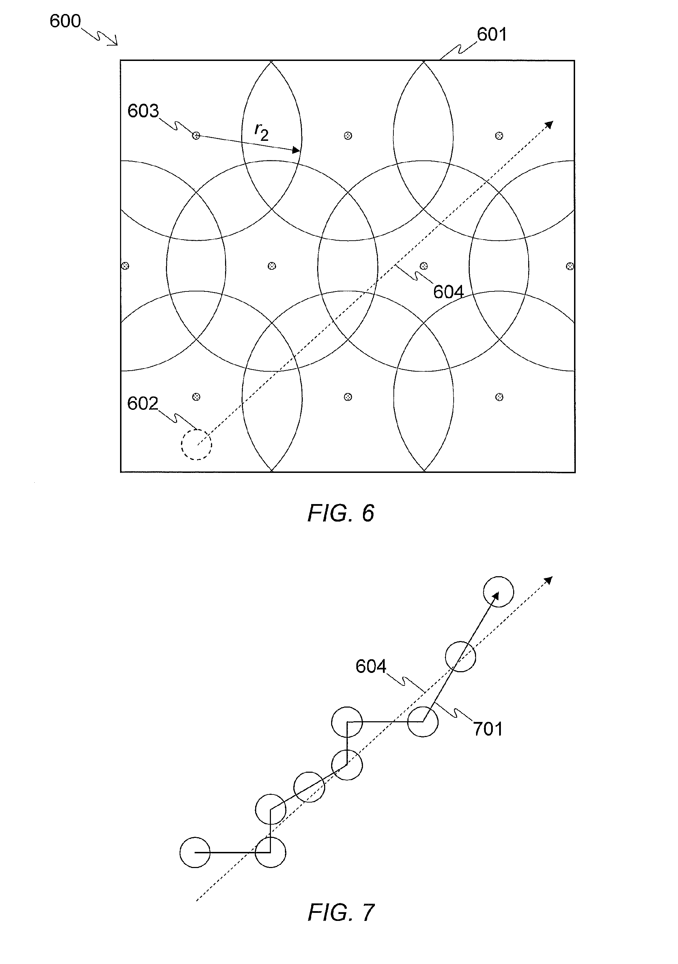

Referring now to Fig. 6, a pseudolite navigation system comprising a plurality of overlapping cells is illustrated, according to an embodiment of the present invention. Like the embodiment of Fig. 3, the embodiment of Fig. 6 comprises ten pseudolites arranged on a hexagonal grid within an area 601. The system 600 allows the location of a receiver 602 to be estimated with a high degree of accuracy. As with the embodiment of Fig. 3, the present embodiment may be used in an area where GNSS signals are present (e.g. an outdoors area) in order to provide augmented functionality, or may be used in an area where GNSS signals are not present (e.g. an indoors location, or built-up area).

However, in the present embodiment, each pseudolite 603 is configured to have a maximum range $r_2$ which is greater than half the separation distance between two neighbouring pseudolites, such that the plurality of cells overlap. This creates a plurality of overlapping regions, enabling the location of the receiver 602 to be determined with greater accuracy than a system which comprises the same number of pseudolites, but in which the cells do not overlap (cf. Fig. 3). Additionally, by having cells which overlap, the "dead space" (i.e. regions in which a receiver is out of range of all of the pseudolites, and hence unable to estimate its location) can be substantially or completely eliminated. In the present embodiment, the plurality of pseudolites are configured to provide coverage across substantially the entire area 601.

Referring now to Fig. 7, a plurality of estimated locations of the receiver as it moves through the system of Fig. 6 is illustrated. As in Fig. 4, the plurality of estimated locations 701 are displayed in sequence as the receiver 602 moves between cells. This sequence of estimated locations 701 comprises a series of discrete locations, which in Fig. 7 are illustrated as a plurality of circles connected by a solid arrow. The arrow indicates the order in which the locations 701 are displayed as the receiver moves through the area 601 (cf. Fig. 6). In comparison with the system comprising non-overlapping cells (cf. Figs. 3 and 4), the present embodiment enables the location of the receiver to be tracked with an even greater degree of accuracy.

In a further embodiment of the present invention, a receiver is configured to measure the received power $P_{Rx}$ of a signal from a pseudolite. Each pseudolite is also configured to include information about its own transmission power $P_{Tx}$ in the signals which are transmitted to receivers. As described above, the power loss may be approximated by an inverse square law. The receiver can therefore calculate the distance between the receiver and pseudolite as $D = k(P_{Tx}/P_{Rx})$. The constant of proportionality $k$ may not be known, but can be assumed to be the same for signals received from all pseudolites in the systems. Therefore, in the present embodiment, if the receiver is at a location where it is able to receive signals from at least three pseudolites, it may still calculate its location $(x_r, y_r)$ by solving the following simultaneous equations to eliminate the constant k:

$$x_r^2 + y_r^2 = x_i^2 + y_i^2 + kD_i^2$$

$$x_r^2 + y_r^2 = x_j^2 + y_j^2 + kD_j^2$$

$$x_r^2 + y_r^2 = x_k^2 + y_k^2 + kD_k^2$$

Here, $(x_i, y_i)$ are the coordinates of a first pseudolite and $D_i$ is the distance between the first pseudolite and the receiver. Similarly, $(x_j, y_j)$ are the coordinates of a second pseudolite, $D_j$ is the distance between the second pseudolite and the receiver, $(x_k, y_k)$ are the coordinates of a third pseudolite and $D_k$ is the distance between the third pseudolite and the receiver.

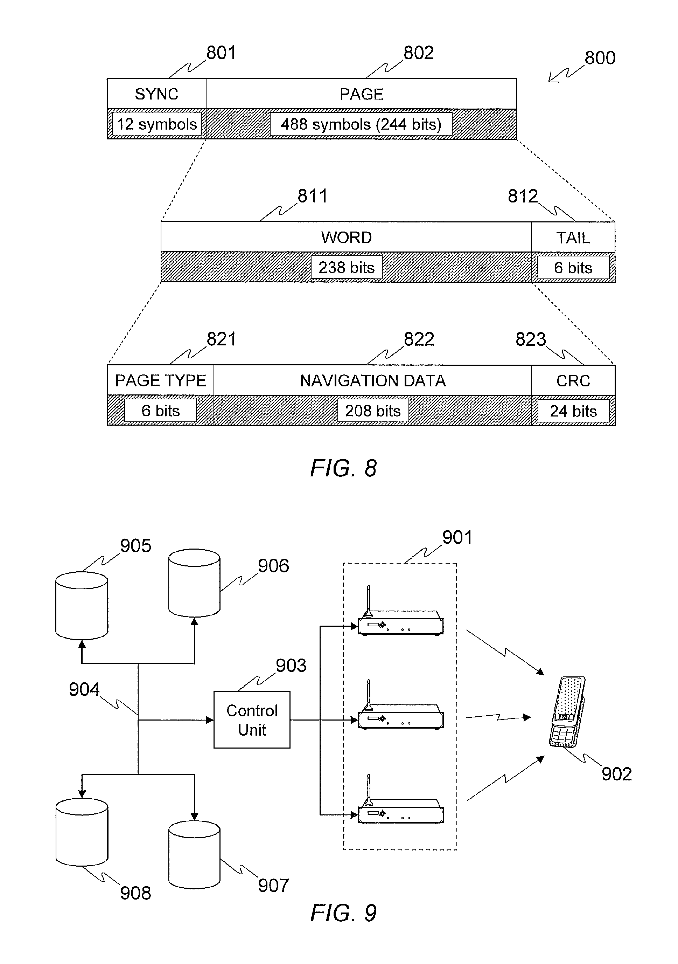

In the embodiments described above, a receiver estimates its current location based on the known locations of a plurality of pseudolites, and based on whether or not it is currently able to receive signals from each one of the pseudolites. Preferably, information about the location of a particular pseudolite is included in the signals transmitted by that pseudolite, as will now be described with reference to Fig. 8. This information can be readily included in a GNSS-like message structure, ensuring compatibility with a standard GNSS receiver. However, in other embodiments, information about the positions of all pseudolites in the system may be pre-programmed into the receiver, or may be sent to the receiver when the receiver first enters the pseudolite navigation system.

Figure 8 illustrates a pseudolite message structure according to an embodiment of the present invention. The message structure corresponds to a structure used by the 'Galileo' GNSS for transmissions on the E5a channel. The message structure of Fig. 8 may therefore be suitable for use in embodiments of the present invention where it is desired to provide compatibility with a Galileo GNSS receiver. In other embodiments, alternative message structures may be substituted according to the particular GNSS with which compatibility is desired (e.g. GPS, GLONASS etc.).

As shown in Fig. 8, the message 800 comprises a frame synchronisation field 801 and a page field 802. The synchronisation field 801 includes a fixed synchronisation pattern, which for the E5a channel in the Galileo system is defined as the binary sequence 101101110000. The page field 802 is used to transmit the specific navigation data, and comprises a word field 811 of 238 bits, and a tail 812 of 6 bits. The word field 811 is subdivided into a page type field 821 of 6 bits, a navigation data field 822 of 208 bits, and a cyclic redundancy check CRC field 823 of 24 bits. Different GNSS specifications (GPS, Galileo, Compass, GLONASS etc.) define different message structures. However, all GNSS-like messages will include a navigation data portion (cf. Fig. 8) which holds information which will be used by the receiver when calculating its position. Embodiments of the present invention may therefore be made compatible with any given GNSS (the 'host' GNSS), by retaining the message structure of the host GNSS and substituting the pseudolite navigation data in the appropriate data portion of the message. When the receiver is able to receive signals from the GNSS satellites, for example when it is outside, the receiver can calculate its location using signals from the satellites. When the receiver moves to a location where signals cannot be received from the satellites, for example when it is indoors, the receiver can continue to calculate its location using signals received from the pseudolites.

In more detail, a typical GNSS defines at least three different message types, which are identified by means of a code included in a 'page type' field (e.g. the 6-bit page type field 821 of Fig. 8). The message types can be broadly defined as 'ephemeris', 'almanac', and 'time and clock correction parameters'. Ephemeris data indicates the precise orbit of the satellite from which the signal is being sent, almanac data indicates the approximate orbits and positions of all satellites within the GNSS constellation, and time and clock correction parameters are used to adjust the Rx clock and compute pseudoranges. Additionally, GNSS satellites may transmit service parameters (e.g. indicators of satellite health), which may be allocated a separate 'service parameters' message type or may be included within the other three message types.

In an embodiment of the present invention, the message structure of the host GNSS is adapted as follows, for use in a cell-based pseudolite navigation system. Firstly, ephemeris data is replaced by data which indicates the precise location of the pseudolite which is sending the signal (e.g. latitude, longitude, floor number on which the pseudolite is located, etc.). Secondly, the almanac data is replaced by data which defines the system configuration (e.g. which pseudolites are included in the system, and approximately where they are located). Thirdly, the time and clock correction parameters are not needed as no synchronisation is required, and hence this data is replaced by any other data which is desired to be transmitted. Here, the data may include data which is not related to navigation, i.e. data which is not used in determining a current location of the receiver.

Referring now to Fig. 9, a pseudolite-based information distribution system comprising a plurality of pseudolites and a receiver is illustrated, according to an embodiment of the present invention. The system further comprises a control unit 903 and a plurality of data storage units 905, 906, 907, 908 coupled to the control unit 903 via a communications link 904. Each one of the plurality of pseudolites 901 and the receiver 902 may be substantially similar to any of the pseudolites and receivers described above. In particular, the receiver 902 is configured to receive signals from the plurality of pseudolites 901, and may be configured to determine its current location based on any of the methods described above (for example, any of the methods illustrated in Figs. 2 to 7).

In the present embodiment, each one of the plurality of pseudolites 901 is configured to communicate with the control unit 903. The plurality of pseudolites 901 and control unit 903 may, for example, communicate over a wired local area network (LAN) connection or a wireless LAN (WLAN) connection, or via a combination of wired and wireless connections.

Furthermore, the control unit 903 is configured to communicate with a plurality of data storage units 905, 906, 907, 908 via a communications link 904, which in the present embodiment is the internet. However, other arrangements are possible. For example, in another embodiment, the data storage units are local data storage units which communicate with the control unit over a local area network.

The control unit 903 can request information from the data storage units 905, 906, 907, 908, or the data storage units 905, 906, 907, 908 can send information to the control unit 903 without it first being requested. The information includes data to be sent to the receiver 902 by one or more of the plurality of pseudolites 901. The information can also include positional information associated with the data, the positional information defining a location or area within a space in which the system is deployed. The control unit 903 processes the received data and positional information, and sends it to the plurality of pseudolites 901. The pseudolites are configured to include the information in the GNSS-like messages sent to the receiver 902. For example, as described above with reference to Fig. 8, the information can be included in a 'time and clock correction parameters' GNSS message type, since the receiver 902 does not need to calculate the time-of-flight of a signal and hence the time and clock correction parameters are not required.

As an example, a system such as the one shown in Fig. 9 may be located in an indoor environment such as a railway terminal. In this case, the data received from the data storage units 905, 906, 907, 908 may comprise, for example, timetable information about train services. The control unit 903 determines which services are arriving or departing in a predetermined time (e.g. in the next 15 minutes), and determines which platform each service is departing from or arriving into. Positional information associated with each platform may be programmed into the control unit 903 during configuration of the system, or can be determined by the control unit 903 based on information about a physical layout of the railway terminal. In this example, the positional information defines an area close to a platform. The control unit 903 then sends the timetable data and associated positional information to the plurality of pseudolites 901, which in turn transmit the timetable data and positional information to the receiver 902.

The receiver 902 receives the timetable data and positional information, and selects timetable data to be displayed based on a current location of the receiver 902. That is, the receiver 902 uses the positional information and its current location to determine whether it is currently located near one of the platforms, and if so, displays the timetable data relevant to that particular platform. In this way, as a user holding the receiver 902 moves around the railway terminal, the user is presented with timetable information specific to a particular platform as they approach that platform.

The data to be sent to the receiver is not limited to timetable information. For example, the data may include information about services available in particular areas of the railway stations, such as ticket machines, payphones, help desks and so on. Similarly, the information distribution system of Fig. 9 is not limited to use in railway terminals. In general, the system may be used in any area to provide location-dependent information to a user.

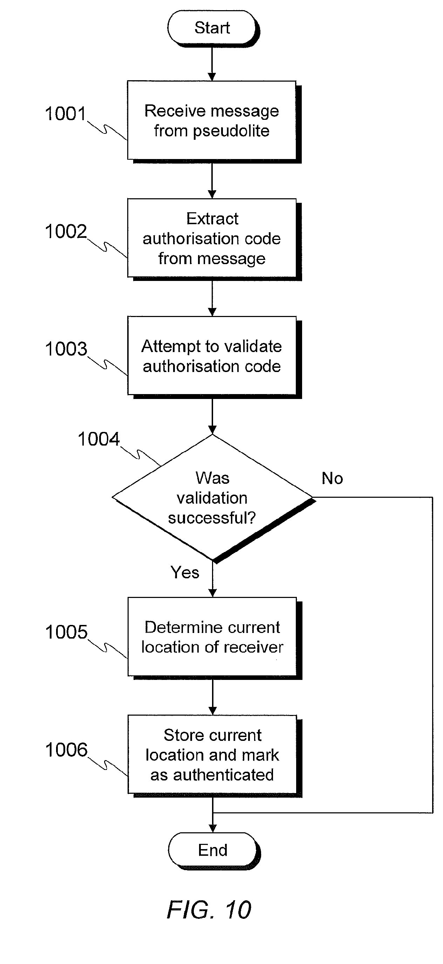

Referring now to Fig. 10, a method of using authentication in a pseudolite navigation system is illustrated, according to an embodiment of the present invention.

In the first step 1001, a receiver receives a message from a pseudolite. The message may be formatted according to a GNSS specification. For example, the message may have a structure similar to the one illustrated in Fig. 8, although alternative message structures may also be used. The receiver and the pseudolite may be substantially similar to any of the receivers and pseudolites illustrated in any embodiment.

Next, in the second step 1002, the receiver processes the received message and extracts an authorisation code contained within the message. The authorisation code may be contained within a reserved portion of the message. Then, in the third step 1003, the receiver attempts to validate the authorisation code to confirm whether or not the message is genuine, i.e. is received from an authorised pseudolite. In this step, the receiver may use a predetermined validation algorithm to validate the authorisation code.

In the fourth step 1004, the receiver determines whether or not to proceed based on the result of the validation procedure in the previous step 1003. Specifically, if the authorisation code cannot be validated, the process ends and the receiver takes no further action. In one embodiment, the receiver may display an error message to alert a user that a message has been received from an authorised source.

If the authorisation code is successfully validated, it can be assumed that the message has been received from an authorised pseudolite, and so the receiver proceeds to determine its current location in the fifth step 1005. To calculate its current location, the receiver may use any of the methods of any embodiment (i.e. any of the methods described herein).

Finally, in the sixth step 1006, the receiver stores a record of its current location in an internal storage unit of the receiver. For example, the receiver may include an internal flash memory for recording information about a journey, by recording the receiver's current location at predetermined time intervals. When recording a current location, the receiver may also mark the recorded location as "authenticated", to denote that the location was calculated based on signals received from one or more authorised pseudolites.

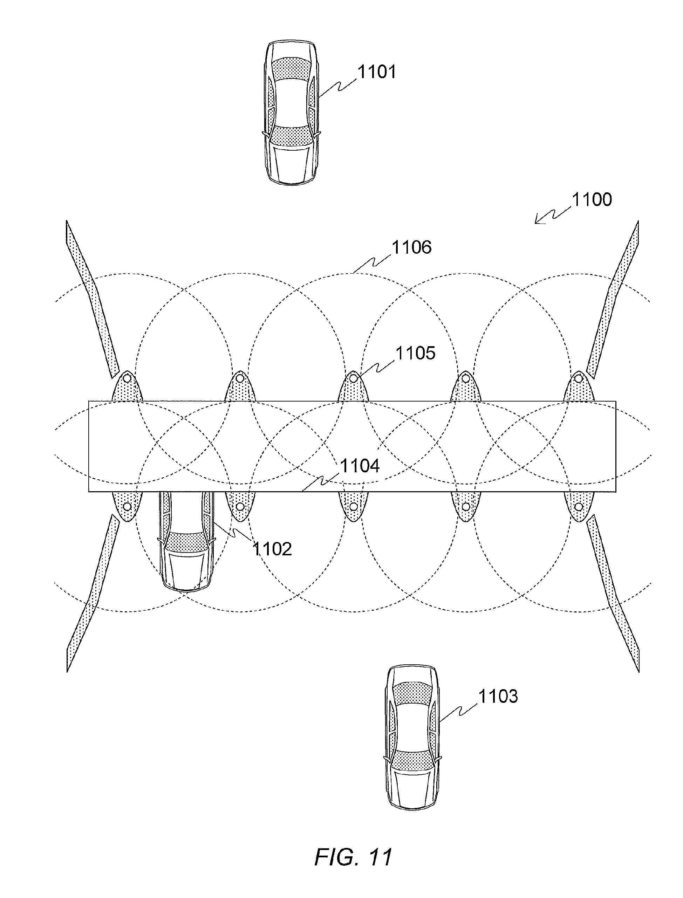

Referring now to Fig. 11, a pseudolite navigation system is illustrated, according to an embodiment of the present invention. The system 1100 comprises a plurality of receivers 1101, 1102, 1103 each of which is located in a vehicle. Each one of the receivers 1101, 1102, 1103 may, for example, comprise a receiver of a GNSS-based in-car satellite navigation system, commonly referred to as a 'sat-nav' system. Alternatively, each one of the receivers 1101, 1102, 1103 may be a standalone GNSS receiver, i.e. a dedicated receiver for use with the system 1100 of Fig. 11.

The system 1100 further comprises a plurality of toll booths 1104 located on a toll road, such as a motorway. A plurality of pseudolites 1105 are located in or near the toll booths 1104, and are configured to define a plurality of cells 1106 in a manner similar to any of the embodiments described herein. Toll roads are well-known, and comprise sections of road where a charge (or 'toll') is levied on drivers for using the road. Each receiver may be configured to calculate its current location using any of the methods disclosed herein (e.g. as illustrated in Figs. 2 to 7). Furthermore, each one of the receivers 1101, 1102, 1103 is configured to record information about its current location, if signals received from the plurality of pseudolites are successfully authenticated (cf. step 1006 of Fig. 10). When a user completes their journey, the recorded information is uploaded to a server, and an account belonging to the user can be automatically debited if it is recorded that the receiver has passed through one of the toll booths 1104. The system 1100 therefore allows drivers to be automatically charged for use of the road when they pass through one of the toll booths 1104.

In the present embodiment, the system 1100 uses an authentication method such as the one shown in Fig. 10, in order to ensure that a receiver only calculates its location based on signals received from authorised pseudolites. For example, if authentication is not used, it may be possible for a user to avoid being charged for use of the toll road, by providing their own pseudolite configured to continuously transmit a signal to the receiver that causes the receiver to incorrectly calculate its current location.

In some embodiments, the sixth step 1006 of the method in Fig. 10 may be omitted. For example, if the authorisation code is successfully validated, the receiver may be configured to determine its current location and then enable or disable certain functionality of the receiver depending on the current location. In one embodiment, a pseudolite-based navigation system may be used to monitor a location of the receiver for security purposes, and the receiver may activate an alarm when it detects that it has entered or left a certain area. The receiver may activate an alarm built in to the receiver, and/or may send a transmission to activate a remote alarm, based on the current location determined in the fifth step 1005.

By using an authentication method such as the one illustrated in Fig. 10, it can be ensured that the current location of the receiver is calculated only based on messages received from authorised pseudolites. This may be particularly advantageous when separate navigation systems are deployed in close proximity to one another, by preventing a receiver of one system inadvertently miscalculating its location based on a message from a pseudolite from the other system. Also, authentication can prevent deliberate attempts to subvert a system by setting up an unauthorised pseudolite or pseudolites which are designed to fool a receiver into calculating its current location incorrectly. This may be particularly important in embodiments where the pseudolite navigation system is used for security purposes, or is used to automatically debit a user's account when a receiver moves from one location to the next (e.g. as in the embodiment of Fig. 11).

Whilst certain embodiments of the present invention have been described above, it will be clear to the skilled person that many variations and modifications are possible without departing from the scope of the invention as defined by the claims. Any feature of any embodiment described may be used in combination with any feature of a different embodiment.

For example, embodiments of the present invention have been described in relation to 2-dimensional arrays of pseudolites. However, in other embodiments the pseudolites may be arranged in 3 dimensions, i.e. different ones of the pseudolites may be located at different heights. In such embodiments, the receiver can calculate its location in 3 dimensions.

Similarly, embodiments of the present invention have been illustrated in which the pseudolites are arranged in a regular array (e.g. Figs. 3 and 6). However, this need not necessarily be the case. In other embodiments, the pseudolites may be arranged irregularly, and may have different operating ranges (i.e. may transmit at different powers). In an embodiment of the present invention, when a pseudolite navigation system is installed, each pseudolite may be located in any convenient location, e.g. a pseudolite may be located alongside existing signage in an environment such as a railway terminal. In such cases, the distribution of pseudolites may be determined by the existing architecture of a structure in which the system is installed, and as such the pseudolites may be arranged irregularly.

Additionally, embodiments of the present invention have been described in which a receiver calculates its location as being the mean location of those pseudolites from which signals are received. However, in other embodiments, alternative methods of determining a location in a particular region (e.g. in a region of overlap) may be used. For instance, each region may be associated with a particular location, which may be arbitrarily chosen during setup of the system. In one embodiment, the particular location may correspond to a geometric centre of the region of overlap. The receiver can uniquely identify which region it is in, based on the combination of pseudolites from which it receives signals (i.e. based on which ones of the pseudolites it is currently within range of). Having identified which region it is in, the receiver can then retrieve the coordinates of the particular location associated with that region, rather than actively calculating a location itself based on locations of the pseudolites. Information identifying the plurality of regions and their associated locations may, for example, be stored in a lookup table which is sent to the receiver. An example of such a lookup table is shown below, relating to the configuration shown in Fig. 5 and using Cartesian coordinates corresponding to a set of arbitrarily defined axes (not shown in Fig. 5):

| Pseudolites within range | Coordinates of estimated location |
|---|---|
| 1 only | (7,12) |
| 1 and 2 | (10,13) |
| 2 only | (15,14) |
| 2 and 3 | (15,9) |
| 3 only | (13,5) |
| 1 and 3 | (9,9) |
| 1, 2 and 3 | (11,10) |

In this embodiment, the receiver does not calculate a position based on the locations of the pseudolites, but instead retrieves a location from the lookup table based only on information about which ones of the pseudolites are currently within range. As such, it may not be necessary to provide the receiver with information about the locations of any of the pseudolite, since the receiver does not need to use this information to determine its current location.

**Claims**

1. A receiver (103) comprising:

   an antenna configured to receive signals wirelessly from a plurality of pseudolites (101, 102), each one of the signals including information defining a pseudolite from which the signal was transmitted; and
   means for determining an estimated location (213) of the receiver based on which one or more pseudolites the receiver is currently within range of.

2. The receiver of claim 1, wherein the receiver is configured to determine the estimated location based on a known location of the one or more pseudolites.

3. The receiver of claim 2, wherein if the receiver is currently within range of only a single one of the plurality of pseudolites, the receiver is configured to calculate the estimated location as being a location of said one of the pseudolites.

4. The receiver of claim 2 or 3, wherein if the receiver is currently within range of at least two of the plurality of pseudolites, the receiver is configured to determine the estimated location as a mean location of the at least two pseudolites.

5. The receiver of claim 2, 3 or 4, wherein the receiver is configured to measure the power of signals received from at least three of the plurality of pseudolites, and to determine the estimated location based on the measured signal powers and known transmission powers of the at least three pseudolites.

6. The receiver of any one of the preceding claims, wherein the receiver is configured to determine the estimated location independently of a time taken for each one of the signals to reach the receiver from the one or more pseudolites.

7. The receiver of claim 6, wherein the receiver is configured to determine the estimated location based only on a known location of the one or more pseudolites, or
   wherein the receiver is configured to determine the estimated location based only on a known location and a known transmission power of the one or more pseudolites.

8. The receiver of any one of the preceding claims, wherein the receiver is configured to receive signals formatted according to a global navigation satellite system GNSS specification from a plurality of GNSS satellites, and
   wherein the receiver is further configured to receive the signals from the plurality of pseudolites according to the GNSS specification.

9. The receiver of any one of the preceding claims, wherein the receiver is configured to validate an authentication code included within a signal received from one of the plurality of pseudolites.

10. The receiver of claim 9, wherein if the authentication code is successfully validated, the receiver is configured to store information about the estimated location.

11. Apparatus (100) comprising:

    a plurality of pseudolites (101, 102); and
    the receiver (103) according to any one of the preceding claims, the receiver being configured to receive signals wirelessly from the plurality of pseudolites.

12. The apparatus of claim 11, wherein the plurality of pseudolites are arranged so as to divide a space into a plurality of regions, such that when the receiver is located within each one of the plurality of regions it is within range of one or more pseudolites and out of range of other ones of the plurality of pseudolites.

13. The apparatus of claim 12, wherein the receiver is configured to determine which one of the plurality of regions it is currently located in, by determining which one or more pseudolites it is currently within range of.

14. The apparatus of claim 11, 12 or 13, wherein each one of the plurality of pseudolites is configured to transmit information about its location and/or its transmission power to the receiver.

15. The apparatus of any one of claims 11 to 14, wherein the plurality of pseudolites and the receiver are configured for use in an indoor environment where the receiver is not able to receive signals from a global navigation satellite system GNSS satellite.

FIG. 1

FIG. 2

FIG. 3

FIG. 4

FIG. 5

FIG. 6

FIG. 7

FIG. 8

FIG. 9

FIG. 10

FIG. 11

| | Europäisches Patentamt<br>European Patent Office<br>Office européen des brevets | **EUROPEAN SEARCH REPORT** | **Application Number**<br>EP 10 27 5130 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2006/262014 A1 (SHEMESH YARON [IL] ET AL) 23 November 2006 (2006-11-23)<br>* paragraph [0021] - paragraph [0032]; figures 1,3 *<br>----- | 1-3, 6-13,15<br>4,5,7,14 | INV.<br>G01S19/11<br>G01S5/14<br>G01S5/02 |
| Y | US 2008/280624 A1 (WRAPPE THOMAS KEITH [US]) 13 November 2008 (2008-11-13)<br>* paragraph [0043]; figures 1,5 *<br>----- | 4,5,7,14 | |
| A | US 5 886 665 A (DOSH MERVIN K [US] ET AL) 23 March 1999 (1999-03-23)<br>* column 3, line 25 - column 4, line 20; figures 1,5 *<br>----- | 1-15 | |
| A | US 6 101 178 A (BEAL ROBERT E [US]) 8 August 2000 (2000-08-08)<br>* column 6, line 52 - column 7, line 53; figure 1 *<br>----- | 1-15 | |

TECHNICAL FIELDS SEARCHED (IPC)

G01S

The present search report has been drawn up for all claims

| Place of search | Date of completion of the search | Examiner |
|---|---|---|
| Munich | 12 May 2011 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 27 5130

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2011

| Patent document cited in search report | | Publication date | Patent family member(s) | | Publication date |
|---|---|---|---|---|---|
| US 2006262014 | A1 | 23-11-2006 | GB 2426399 A<br>WO 2006124327 A2 | | 22-11-2006<br>23-11-2006 |
| US 2008280624 | A1 | 13-11-2008 | BR PI0418696 A<br>WO 2005106523 A1 | | 12-06-2007<br>10-11-2005 |
| US 5886665 | A | 23-03-1999 | NONE | | |
| US 6101178 | A | 08-08-2000 | US 6771625 B1 | | 03-08-2004 |

EPO FORM P0459

For more details about this annex : see Official Journal of the European Patent Office, No. 12/82